# FASCICULE DE BREVET EUROPEEN

(11) **EP 3 297 831 B1**
(45) Date de publication et mention de la délivrance du brevet: **20.03.2019**
(21) Numéro de dépôt: 16726811.9
(22) Date de dépôt: 19.05.2016
(51) Int. Cl.: B32B 33/00, B32B 37/14, B32B 38/18, B32B 3/12, B32B 15/01, B60N 2/68

(54) **PROCEDE AMELIORE DE FABRICATION D'UNE PIECE METALLIQUE DU TYPE SANDWICH PRESENTANT UNE FORME NON-DEVELOPPABLE**
VERBESSERTES VERFAHREN ZUR HERSTELLUNG EINES SANDWICH-METALLWERKSTÜCKS MIT NICHT ENTWICKELBARER FORM
IMPROVED METHOD FOR PRODUCING A SANDWICH METAL PART HAVING A NON-DEVELOPABLE SHAPE

(30) Priorité: 22.05.2015 FR 1554611
(43) Date de publication de la demande: 28.03.2018
(73) Titulaire: Halcyon, 35135 Chantepie (FR)
(72) Inventeur: PICAUT, Gwenaël, 35135 Chantepie (FR)
(74) Mandataire: Brevalex
(86) Numéro de dépôt international: PCT/EP2016/061206
(87) Numéro de publication internationale: WO 2016/188834

(56) Documents cités:
- Anonymous: "Honeycomb Panel, Aluminum Honeycomb Panel, Aluminum Honeycomb Core Manufacturers", , 12 janvier 2015 (2015-01-12), XP055255713, Extrait de l'Internet: URL:http://web.archive.org/web/20150112142 759/http://www.universalmetaltek.com/honey comb_panel.htm [extrait le 2016-03-07]

## Description

### DOMAINE TECHNIQUE

La présente invention se rapporte à la fabrication de pièces du type sandwich de forme complexe, non-développable.

L'invention s'applique à tous les domaines techniques qui requièrent des pièces de forme complexe, en particulier aux domaines des transports routier, aérien, ferroviaire et maritime.

### ETAT DE LA TECHNIQUE ANTERIEURE

Une pièce du type sandwich présente généralement une âme en nid-d'abeilles ainsi que deux peaux agencées de part et d'autre de cette âme, et collées à celle-ci. Ce type de configuration permet l'obtention d'une grande rigidité tout en présentant une masse globale faible. A cet égard, il est noté que de manière connue, le fait d'écarter les peaux de part et d'autre de la fibre neutre permet d'obtenir un moment d'inertie très important, puisque ce moment d'inertie est proportionnel au cube de la distance à la fibre neutre.

De l'art antérieur, il existe des solutions dites « métalliques » consistant à réaliser à la fois l'âme et les peaux en matériau métallique, par exemple en aluminium ou dans l'un de ses alliages. Ces solutions résident habituellement dans l'obtention de panneaux de forme sensiblement plane, comprenant les peaux collées de part et d'autre de l'âme. Eventuellement, les panneaux ainsi obtenus sont ensuite mis en forme, par exemple par pliage, cintrage, etc. Un tel procédé est par exemple illustré à la page internet suivante: "Aluminum Honeycomb Panels", Aluminum Metaltek, 12.01.2015 [extrait le 07.03.2016], <http:// web.archive.org/web/20150112142759/http://www.universalmetaltek.com/honeycomb_panel.htm>. Cependant, ces étapes additionnelles de reprise ne permettent pas l'obtention de pièces finales de formes complexes, mais tout au plus des pièces de forme simple, développable.

Pour réaliser des pièces métalliques de formes complexes non-développables, il est possible de prévoir une solution dite « monolithique » dans laquelle la pièce est réalisée d'un seul tenant. Des techniques appropriées comme l'emboutissage permettent alors l'obtention de formes complexes pour la pièce, mais le besoin en résistance mécanique conduit habituellement à prévoir une pièce avec une épaisseur importante, au détriment de sa masse globale. Cette technique peut donc s'avérer incompatible avec les contraintes d'exploitation rencontrées dans certaines applications, notamment dans le domaine des transports.

L'obtention de pièces sandwich de formes complexes est également possible à l'aide de peaux en matériau composite, par exemple un mélange de fibres de carbone et/ou de fibres de verre avec une résine. Cependant, cette technique présente de nombreux inconvénients par rapport à la solution sandwich métallique précitée. Parmi ces inconvénients, il est mentionné la faible rigidité et la faible résistance aux chocs, le coût de fabrication élevé résultant notamment de la main d'oeuvre nécessaire à la mise en place des plis sur l'outillage, la difficulté d'implantation d'organes d'interface sur la pièce sandwich composite, le caractère non-recyclable des éléments composites, la faible tenue aux critères feu-fumée, etc.

### EXPOSÉ DE L'INVENTION

L'invention a pour but de remédier au moins partiellement aux inconvénients mentionnés ci-dessus, relatifs aux réalisations de l'art antérieur.

Pour ce faire, l'invention a pour objet un procédé de fabrication d'une pièce métallique du type sandwich présentant une forme non-développable, ladite pièce comprenant une âme en nid-d'abeilles métallique ainsi que deux peaux métalliques agencées de part et d'autre de l'âme, ledit procédé comprenant :
- une étape de déformation plastique de tôles pour l'obtention des deux peaux métalliques ; puis,
- une étape de solidarisation des deux peaux à l'âme.

L'invention rompt ainsi radicalement avec les technologies actuelles, en prévoyant de déformer plastiquement des tôles afin d'obtenir des peaux métalliques de forme complexe, avant même leur collage sur l'âme. Cette technique spécifique à l'invention offre, pour la pièce, des possibilités de formes finales qui sont bien plus étendues que celles résultant d'opérations de reprise d'un panneau sandwich plat métallique. En outre, en raison de l'aspect « sandwich » de la pièce, celle-ci présente un rapport rigidité sur poids qui est largement plus satisfaisant que celui atteint avec la solution monolithique de l'art antérieur. Dans le cas particulier du domaine des transports, il en résulte une économie d'énergie pour la propulsion du véhicule de transport intégrant cette pièce.

De plus, par rapport aux réalisations intégrant des peaux en matériau composite, l'invention confère de nombreux avantages, parmi lesquels une plus forte rigidité et une plus forte résistance aux chocs, une réduction du coût de fabrication principalement en raison de l'absence de main d'oeuvre liée au drapage des plis, une plus grande facilité d'implantation d'organes d'interface sur la pièce sandwich métallique, un caractère recyclable des éléments métalliques, ou encore une tenue satisfaisante aux critères feu-fumée qui améliore la sécurité passive. Egalement, lorsque la pièce doit être peinte, les reprises en peinture sont largement plus faibles que celles observées avec la solution en composite, susceptible de présenter des défauts de peinture dus à des porosités sur la pièce composite.

L'invention comprend de préférence au moins l'une des caractéristiques optionnelles suivantes, prises isolément ou en combinaison.

Le procédé comprend également une étape de déformation plastique de l'âme en nid-d'abeilles métallique, mise en oeuvre avant ladite étape de solidarisation des deux peaux à cette âme. Néanmoins, selon la forme finale désirée pour la pièce sandwich, cette étape de déformation plastique n'est pas forcément nécessaire. En effet, la seule déformation élastique de l'âme en nid-d'abeilles peut s'avérer suffisante pour que cette âme adopte un profil identique ou similaire à celui de la pièce finale désirée. Dans le cas où la déformation élastique de l'âme n'est pas suffisante pour atteindre le profil désiré, d'autres techniques que la déformation plastique peuvent être envisagées. Il s'agit par exemple d'une ou plusieurs découpes au sein de l'âme afin de libérer des contraintes, ou bien encore la réalisation d'usinages appropriés sur cette âme. Dans les deux cas, il en résulte un accroissement de la capacité de déformation élastique de l'âme en nid-d'abeilles.

De préférence, lorsqu'une déformation plastique de l'âme est mise en oeuvre, un étirement élastique est appliqué sur cette âme durant sa déformation plastique. Cet étirement permet en quelques sortes d'aplatir les cellules du nid-d'abeilles, pour leur faire adopter une forme qui se rapproche alors plus d'un rectangle que d'un hexagone, correspondant à la forme initiale de ces cellules. D'ailleurs, il est également possible d'envisager une âme en nid-d'abeilles avec des cellules de forme rectangulaire à l'état neutre, non contraint.

Grâce à la forme étirée sensiblement rectangulaire des cellules, l'âme présente une plus grande capacité à se déformer dans plusieurs directions, ce qui facilite l'obtention d'un profil de forme complexe, non-développable.

De préférence, l'étape de déformation plastique des tôles pour l'obtention des deux peaux métalliques est réalisée à l'aide d'au moins l'une des techniques suivantes : chaudronnerie, carrosserie, formage incrémental, emboutissage, formage au caoutchouc, thermoformage. A cet égard, il est noté que la technique de formage incrémental est privilégiée pour la fabrication d'une petite série de pièces, tandis que la technique d'emboutissage est préférée pour la fabrication d'une moyenne et d'une grande série de pièces.

De préférence, les deux peaux présentent chacune une épaisseur comprise entre 0,5 et 3 mm, et/ou en ce que l'âme présente une épaisseur comprise entre 3 et 50 mm.

De préférence, l'étape de solidarisation des deux peaux à l'âme est réalisée à l'aide d'une colle polymérisable, en plaçant les peaux et l'âme dans un moule équipé d'une bâche à vide. Les deux peaux sont alors préférentiellement encollées avant leur mise en place dans le moule.

Enfin, les peaux et l'âme sont chacune réalisées en aluminium ou dans l'un de ses alliages, même si d'autres matériaux métalliques peuvent être envisagés, sans sortir du cadre de l'invention.

L'invention a également pour objet un véhicule de transport comprenant au moins une pièce métallique obtenue par la mise en oeuvre du procédé décrit ci-dessus.

De préférence, il s'agit d'un véhicule de transport ferroviaire, mais d'autres applications sont envisageables, comme un véhicule de transport routier, aérien ou maritime.

D'autres avantages et caractéristiques de l'invention apparaîtront dans la description détaillée non limitative ci-dessous.

### BRÈVE DESCRIPTION DES DESSINS

Cette description sera faite au regard des dessins annexés parmi lesquels ;
- la figure 1 représente une vue en perspective d'un siège passager pour véhicule ferroviaire, destiné à être obtenu par un procédé selon l'invention ;
- la figure 2 représente une vue en coupe prise le long de la ligne II-II de la figure 1;
- la figure 3 représente une vue en coupe prise le long de la ligne III-III de la figure 2 ;
- la figure 4 illustre une étape de déformation plastique d'une tôle, lors de la mise en oeuvre d'un procédé de fabrication selon un mode de réalisation préféré de l'invention ;
- les figures 5a à 5f représentent différentes vues schématisant une étape de déformation plastique de l'âme en nid-d'abeilles ; et
- les figures 6a à 6d représentent différentes vues schématisant une étape de solidarisation des deux peaux à l'âme en nid-d'abeilles.

### EXPOSÉ DÉTAILLÉ DE MODES DE RÉALISATION PRÉFÉRÉS

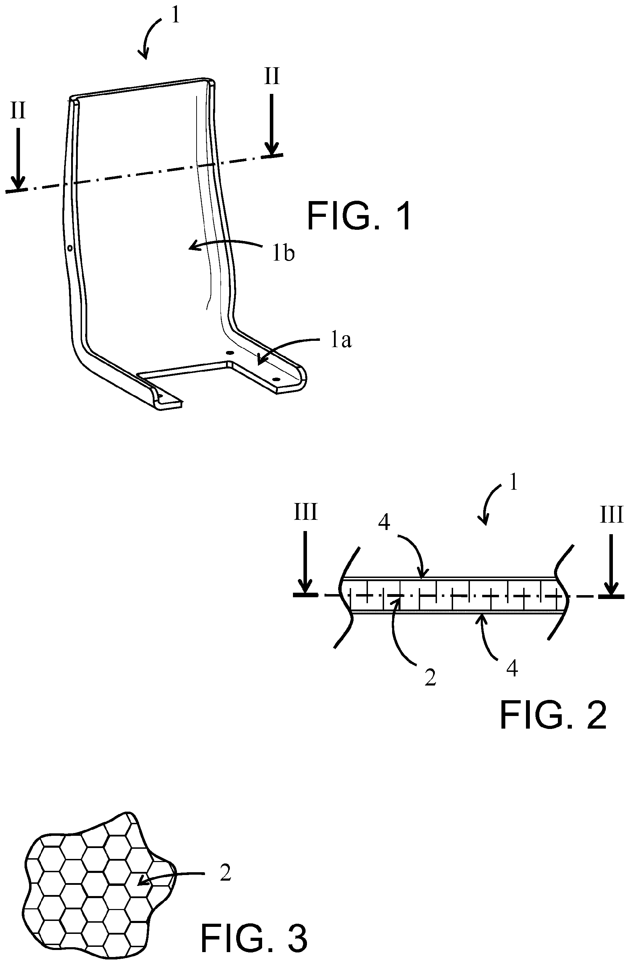

En référence tout d'abord à la figure 1, il est représenté une pièce métallique du type sandwich, obtenue par un procédé de fabrication selon l'invention. Dans cet exemple, il s'agit d'un siège passager pour véhicule ferroviaire, mais l'invention n'est pas limitée à ce domaine. L'invention s'applique en effet à la fabrication de toute pièce sandwich de forme complexe non-développable, dite forme 3D complexe. Il peut par exemple s'agir d'une forme gauche, à double courbure, etc., par opposition aux formes plus simples telles que les formes plates et développables. Il est noté que dans le contexte de cette invention, la notion de forme / surface développable correspond à la définition usuelle, à savoir une forme / surface réglée telle que le plan tangent est le même le long d'une génératrice. Il est donc possible de « faire rouler sans glisser » une telle forme / surface développable sur un plan, le contact se faisant le long d'une droite, comme pour un cylindre ou un cône.

L'invention s'applique tout particulièrement aux domaines des transports routier, aérien, ferroviaire et maritime, pour la réalisation de pièces ultralégères et ultra-rigides, de structure ou d'habillage d'un véhicule de transport. Des exemples d'application sont cités ci-dessous :
- siège passager (coque et structure au sein d'une seule pièce sandwich) ;
- masque de baie (pièce d'habillage pour le contour d'une fenêtre) ;
- pièce de bout : « nez » de train, de tram ou de bus ;
- capotage pour climatiseur situé au-dessus d'un bus ;
- tout ou partie d'une jante de roue de véhicule automobile.

En référence aux figures 1 à 3, il est donc représenté une pièce métallique 1 prenant la forme d'un siège passager pour véhicule ferroviaire. Cette pièce 1 est obtenue par un procédé de fabrication qui est propre à la présente invention, et qui sera décrit de manière détaillée ci-après. La pièce 1 présente une épaisseur qui est sensiblement constante, par exemple de l'ordre de 5 à 20 mm. Néanmoins, cette épaisseur pourrait varier au sein de la pièce 1, sans sortir du cadre de l'invention. La pièce 1 présente une grande dimension pouvant par exemple aller de 1m à 2m, la grande dimension correspondant à la distance d'écartement maximale entre deux points quelconques de la pièce 1.

La pièce 1 présente une partie d'assise la et un dossier 1b. D'autres éléments non représentés sont destinés à être assemblés ultérieurement sur cette pièce 1, comme par exemple des inserts pour la fixation d'accoudoirs, des vis, des équerres de renforcement, etc.

La pièce métallique 1 est du type sandwich, c'est-à-dire qu'elle présente une âme en nid-d'abeilles 2 ainsi que deux peaux métalliques 4 agencées de part et d'autre de l'âme, et collées à celle-ci. Ces trois éléments constitutifs 2, 4 sont réalisés en aluminium ou dans l'un de ses alliages. Chaque peau 4 présente une épaisseur comprise entre 0,5 et 3 mm, tandis que l'âme 2 présente une épaisseur par exemple comprise entre 3 et 50 mm. Chacun de ces trois éléments 2, 4 s'étend sur toute la surface de la pièce finale 1, en adoptant une forme globale identique ou similaire à celle de cette même pièce finale, tout en présentant une épaisseur inférieure. Ainsi, c'est la superposition de ces trois éléments 2, 4 qui permet l'obtention de la pièce sandwich métallique 1.

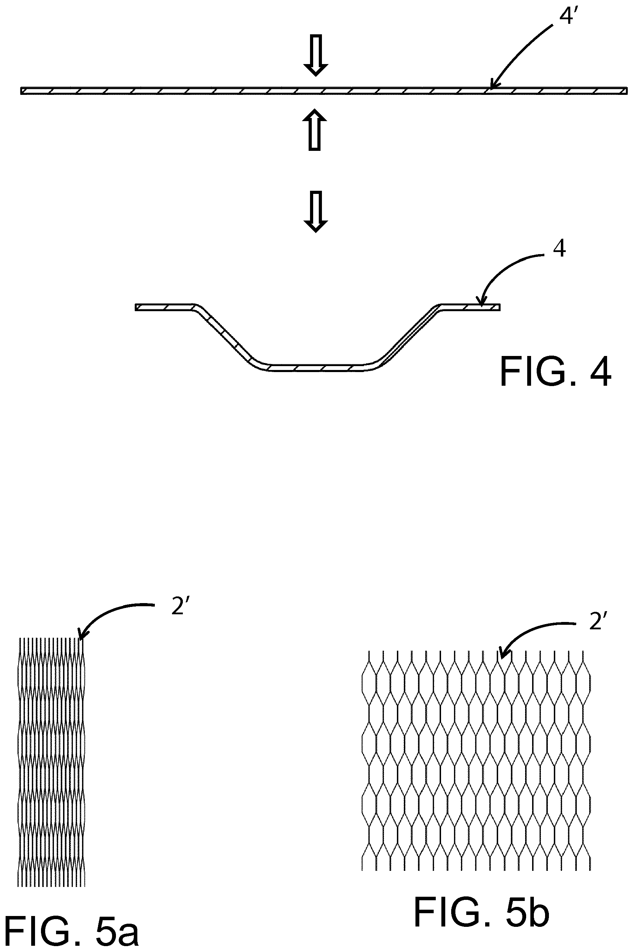

La figure 4 et les figures suivantes illustrent un mode de réalisation préféré du procédé de fabrication de la pièce 1. Cependant, pour des raisons de clarté et de compréhension des figures, la pièce 1 y a été représentée selon une forme plus simple que celle du siège montré sur la figure 1. Cependant, comme indiqué ci-dessus, il doit être compris que la pièce destinée à être obtenue par le procédé selon l'invention présente en réalité une surface complexe 3D non-développable, comme une forme gauche, à double courbure, etc.

La première étape du procédé est schématisée sur la figure 4. Elle consiste, pour chacune des deux peaux 4, à partir d'une tôle métallique plane 4' et de la déformer plastiquement de façon à lui faire adopter une forme sensiblement identique à celle de la pièce finale, avec toutefois une épaisseur nécessairement inférieure. Pour opérer cette déformation plastique, plusieurs techniques peuvent être envisagées. L'une des techniques préférées réside dans le formage incrémental, adopté pour la réalisation d'une petite série de pièces. Cette technique de prototypage rapide est basée de façon connue sur un principe de déformation plastique locale d'une tôle, afin de la mettre en forme progressivement. Une solution plus conventionnelle d'emboutissage est préférentiellement retenue pour la fabrication de pièces en moyenne ou en grande série.

Ensuite, il est mis en oeuvre une étape de déformation plastique de l'âme en nid-d'abeilles métallique, schématisée sur les figures 5a à 5f.

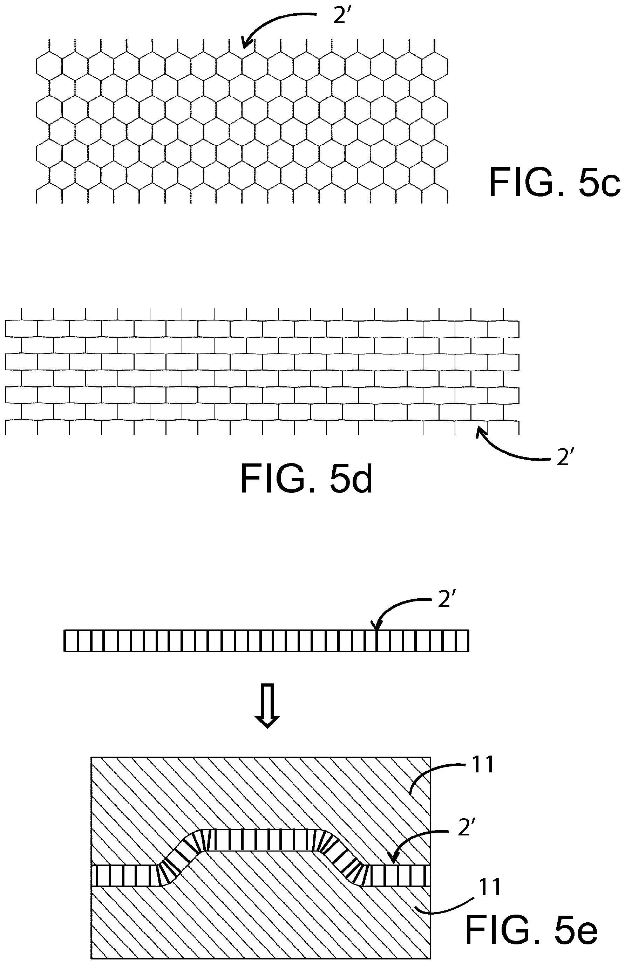

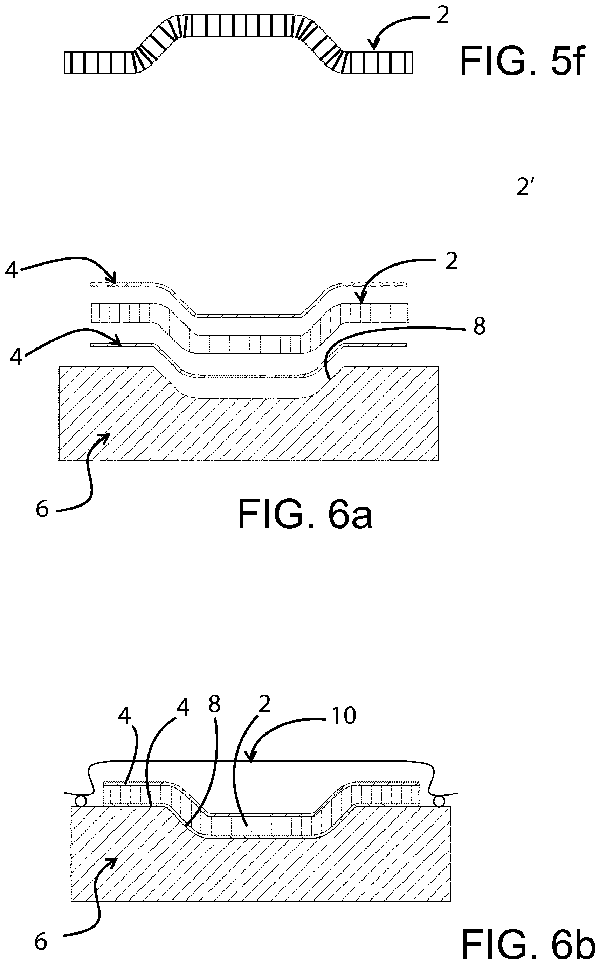

Elle consiste à partir d'un élément plat en nid-d'abeilles et de le déformer plastiquement de façon à lui faire adopter une forme sensiblement identique à celle de la pièce finale, avec ici aussi une épaisseur nécessairement inférieure. Pour effectuer cette déformation, un élément plat 2' en nid-d'abeilles est étiré dans le plan de cet élément, comme cela a été schématisé sur les figures 5a à 5d. En d'autres termes, l'étirement de l'élément 2' est poursuivi après l'obtention des cellules de forme hexagonales montrées sur la figure 5c, jusqu'à ce que ces cellules adoptent une forme sensiblement rectangulaire, montrée sur la figure 5d. Grâce à cette forme étirée, l'élément 2' présente une plus grande capacité à se déformer dans plusieurs directions sans rompre, ce qui facilite l'obtention d'un profil de forme complexe, non-développable. Cette étape est alors poursuivie en déformant plastiquement l'élément étiré 2', comme cela a été schématisé sur la figure 5e, par exemple par emboutissage à l'aide d'un outillage approprié 11. L'emboutissage entraîne le pliage de certaines parois de l'élément en nid-d'abeilles 2', qui permet l'obtention de l'âme 2 montrée sur la figure 5f et présentant une forme globale identique ou similaire à celle de la pièce finale désirée. Le pliage est plus ou moins prononcé en fonction de la courbure souhaitée.

Une fois les trois éléments 2, 4 obtenus pour la constitution de la pièce sandwich 1, il est mis en oeuvre une dernière étape de solidarisation visant à fixer les peaux déformées 4 sur l'âme déformée 2. Cette étape est schématisée sur les figures 6a à 6d.

Pour ce faire, les deux peaux 4 sont d'abord encollées à l'aide d'une colle polymérisable, par exemple une colle époxy. Comme le montre la figure 6a, les deux peaux 4 et l'âme en nid-d'abeilles 2 sont ensuite placées de manière superposée dans un moule 6, dont l'empreinte de moulage 8 présente une forme correspondante de celle de la surface extérieure de la peau 4 située en dessous dans l'empilement. Comme l'illustre la figure 6b, l'étape est poursuivie en plaçant une bâche à vide 10 sur la partie supérieure du moule, de manière à ce que celle-ci épouse la surface extérieure de la peau 4 située au-dessus dans l'empilement.

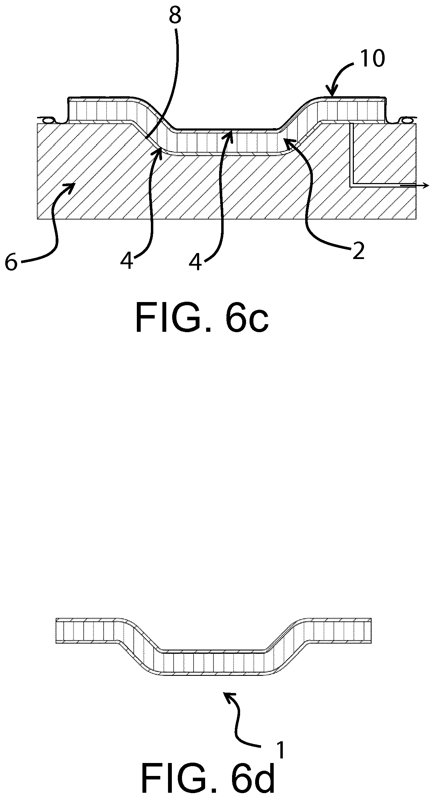

Ensuite, la figure 6c montre qu'il est appliqué une dépression dans l'espace situé entre le corps du moule et sa bâche 10, de manière à ce que cette dernière exerce une pression uniforme sur l'empilement des éléments 2, 4. La dépression appliquée est d'environ 0,9 bar, ce qui permet d'obtenir une pression de l'ordre de 9t/m².

Une fois la colle polymérisée, la pièce finalisée 1 peut être extraite du moule, comme cela est schématisé sur la figure 6d.

Bien entendu, diverses modifications peuvent être apportées par l'homme du métier à l'invention qui vient d'être décrite, uniquement à titre d'exemples non limitatifs.

## Revendications

1. Procédé de fabrication d'une pièce métallique (1) du type sandwich présentant une forme non-développable, ladite pièce comprenant une âme en nid-d'abeilles métallique (2) ainsi que deux peaux métalliques (4) agencées de part et d'autre de l'âme, ledit procédé comprenant :
- une étape de déformation plastique de tôles (4') pour l'obtention des deux peaux métalliques (4) ; puis,
- une étape de solidarisation des deux peaux (4) à l'âme (2).

2. Procédé selon la revendication 1, **caractérisé en ce qu'**il comprend également une étape de déformation plastique de l'âme en nid-d'abeilles métallique (2), mise en oeuvre avant ladite étape de solidarisation des deux peaux à cette âme.

3. Procédé selon la revendication 2, **caractérisé en ce que** durant ladite étape de déformation plastique de l'âme en nid-d'abeilles métallique (2), un étirement élastique est appliqué sur ladite âme.

4. Procédé selon l'une quelconque des revendications précédentes, **caractérisé en ce que** l'étape de déformation plastique des tôles (4') pour l'obtention des deux peaux métalliques (4) est réalisée à l'aide d'au moins l'une des techniques suivantes : chaudronnerie, carrosserie, formage incrémental, emboutissage, formage au caoutchouc, thermoformage.

5. Procédé selon l'une quelconque des revendications précédentes, **caractérisé en ce que** les deux peaux (4) présentent chacune une épaisseur comprise entre 0,5 et 3 mm, et/ou **en ce que** l'âme (2) présente une épaisseur comprise entre 3 et 50 mm.

6. Procédé selon l'une quelconque des revendications précédentes, **caractérisé en ce que** l'étape de solidarisation des deux peaux (4) à l'âme (2) est réalisée à l'aide d'une colle polymérisable, en plaçant les peaux et l'âme dans un moule (6) équipé d'une bâche à vide (10).

7. Procédé selon la revendication 6, **caractérisé en ce que** les deux peaux (4) sont encollées avant leur mise en place dans le moule (6).

8. Procédé selon l'une quelconque des revendications précédentes, **caractérisé en ce que** les peaux (4) et l'âme (2) sont chacune réalisées en aluminium ou dans l'un de ses alliages.

9. Véhicule de transport, **caractérisé en ce qu'**il comprend au moins une pièce métallique (1) obtenue par la mise en oeuvre du procédé selon l'une quelconque des revendications précédentes.

10. Véhicule selon la revendication 9, **caractérisé en ce qu'**il est un véhicule de transport ferroviaire.

## Patentansprüche

1. Verfahren zur Herstellung eines Metallstücks (1) vom Sandwich-Typ, welches eine nicht entwickelbare Form aufweist, wobei das Stück einen metallischen wabenförmigen Kern (2) sowie zwei Metallaußenschichten (4) umfasst, die beiderseits des Kerns angeordnet sind, wobei das Verfahren umfasst:
- einen Schritt der plastischen Verformung von Blechen (4') zum Erhalt der zwei Metallaußenschichten (4); ferner
- einen Schritt der Verbindung der zwei Außenschichten (4) mit dem Kern (2).

2. Verfahren nach Anspruch 1, **dadurch gekennzeichnet, dass** es auch einen Schritt der plastischen Verformung des metallischen wabenförmigen Kerns (2) umfasst, der vor dem Schritt der Verbindung der zwei Außenschichten mit dem Kern erfolgt.

3. Verfahren nach Anspruch 2, **dadurch gekennzeichnet, dass** während der plastischen Verformung des metallischen wabenförmigen Kerns (2) der Kern einer elastischen Streckung unterzogen wird.

4. Verfahren nach einem der vorhergehenden Ansprüche, **dadurch gekennzeichnet, dass** der Schritt der plastischen Verformung der Bleche (4') zum Erhalt der zwei Metallaußenschichten (4) mittels wenigstens einer der folgenden Techniken ausgeführt wird: Kesselschmieden, Karosseriebau, inkrementelle Fertigung, Stanzen, Formen von Kautschuk, Thermoformen.

5. Verfahren nach einem der vorhergehenden Ansprüche, **dadurch gekennzeichnet, dass** die zwei Außenschichten (4) jeweils eine Dicke von 0,5 bis 3 mm aufweisen und/oder, dass der Kern (2) eine Dicke zwischen 3 und 50 mm aufweist.

6. Verfahren nach einem der vorhergehenden Ansprüche, **dadurch gekennzeichnet, dass** der Schritt der Verbindung der zwei Außenschichten (4) mit dem Kern (2) mittels eines polymerisierbaren Klebers realisiert wird, indem die Außenschichten und der Kern in einer Form (6) platziert werden, die mit einer Vakuumabdeckung (10) versehen ist.

7. Verfahren nach Anspruch 6, **dadurch gekennzeichnet, dass** die zwei Außenschichten (4) vor ihrer Platzierung in der Form (6) beleimt werden.

8. Verfahren nach einem der vorhergehenden Ansprüche, **dadurch gekennzeichnet, dass** die Außenschichten (4) und der Kern (2) jeweils aus Aluminium oder einer seiner Legierungen gefertigt werden.

9. Transportfahrzeug, **dadurch gekennzeichnet, dass** es wenigstens ein Metallstück (1) umfasst, welches durch die Ausführung des Verfahrens nach einem der vorhergehenden Ansprüche erhalten wurde.

10. Fahrzeug nach Anspruch 9, **dadurch gekennzeichnet, dass** es ein Schienentransportfahrzeug ist.

## Claims

1. A method for producing a sandwich type metal part (1) having a non-developable shape, said part comprising a metal honeycomb core (2) as well as two metal skins (4) arranged on either side of the core, said method comprising:
- a step of plastically deforming metal sheets (4') for obtaining both metal skins (4); and then
- a step of securing both skins (4) to the core (2).

2. The method according to claim 1, **characterised in that** it also comprises a step of plastically deforming the metal honeycomb core (2), implemented before said step of securing both skins to this core.

3. The method according to claim 2, **characterised in that** during said step of plastically deforming the metal honeycomb core (2), an elastic stretching is applied to said core.

4. The method according to any of the preceding claims, **characterised in that** the step of plastically deforming the metal sheets (4') for obtaining both metal skins (4) is made using at least one of the following techniques: sheet-metal work, body making, incremental forming, drawing, rubber forming, thermoforming.

5. The method according to any of the preceding claims, **characterised in that** both skins (4) each have a thickness between 0.5 and 3 mm, and/or **in that** the core (2) has a thickness between 3 and 50 mm.

6. The method according to any of the preceding claims, **characterised in that** the step of securing both skins (4) to the core (2) is made using a polymerisable adhesive, by placing the skins and the core in a mould (6) equipped with a vacuum bag (10).

7. The method according to claim 6, **characterised in that** both skins (4) are adhered before being placed in the mould (6).

8. The method according to any of the preceding claims, **characterised in that** the skins (4) and the core (2) are each made of aluminium or one of its alloys.

9. A transport vehicle, **characterised in that** it comprises at least one metal part (1) obtained by implementing the method according to any of the preceding claims.

10. The vehicle according to claim 9, **characterised in that** it is a railway transport vehicle.
